# EUROPEAN PATENT APPLICATION

(11) **EP 1 827 047 A1**
(43) Date of publication of application: **29.08.2007**
(21) Application number: 06290307.5
(22) Date of filing: 23.02.2006
(51) Int. Cl.: H04Q 7/38, H04L 12/56, H04L 12/28

(54) **Mobility management method for mobile terminals in a cellular wireless communication system, as well as corresponding equipment**

(71) Applicant: Nortel Networks Limited, St Laurent, Québec H4S 2A9 (CA)
(72) Inventor: Duplessis, Philippe, 92700 Colombes (FR)
(74) Representative: Ameline, Jean-Paul B.C.

(57) **Abstract**

The cellular wireless communication system has a core network (1), base stations (3a) distributed over a territory covered by the system and base station controllers (2a) each controlling a plurality of the base stations. A base station controlled by a base station controller broadcasts a static list of beacon channels respectively used by other base stations neighboring the controlled base station. A radio resource control connection is established between the base station controller and a mobile terminal (50) within range of the base station. The base station controller obtains from the core network an identifier of a beacon channel associated with a user of the mobile terminal and transmits this identifier to the mobile terminal over the radio resource control connection. The mobile terminal monitors beacon channels of the static list and also the associated beacon channel identified over the radio resource control connection.

## Description

The present invention relates to mobility management in cellular wireless communication systems, in particular in the context of the deployment of home gateways for cellular radio networks.

It will be described below in its particular application to third generation (3G) cellular networks of the UMTS ("Universal Mobile Telecommunications Service") type. However, it will be appreciated that it is applicable to very diverse types of digital cellular systems.

It has been proposed (see e.g. US patent 6,615,035) to provide customers of cellular operators with so-called home base stations (HBS). Such a unit is to be connected to the customer's telephone land line and it presents a radio interface similar to that of the cellular infrastructure. When the customer uses his/her handset at home, namely within range of the HBS, the call is established via the land line and the public switched telephone network (PSTN) instead of the cellular network. Mobility functions between the coverage of the HBS and the cells of the cellular infrastructure are not offered.

The deployment of home base stations poses a number of problems, in particular for radio engineering and access control. The HBS have not been designed for extending the coverage of the cellular infrastructure, but rather as a convenience for the customer to use his/her handset at home while paying the communications at the PSTN tariff.

Although the concept of HBS has not been very successful so far, it has the potential of providing indoor coverage, which is always a challenge from the point of view of the cellular operator. This advantage also exists with the concept of "home gateway". A home gateway (HGW) also provides a radio interface similar to that of the cellular infrastructure, but it interfaces with the cellular network rather than with the PSTN. The coverage of the HGW can be considered as a cell of the network, to which it is fully integrated.

A particular difficulty encountered in the deployment of home gateways relates to the ability to hand over a user communication going on through a serving base station belonging to the "public" part of the network to a HGW which belongs to a "private" part, i.e. to which access is not allowed for everybody. Such functionality is useful, for example, when the user arrives home where the HGW provides indoor coverage in much better conditions than the public macrocell. It implies that, during a communication, the mobile terminal monitors beacon channels broadcast from cells in the neighborhood of the serving base station including the beacon channel broadcast by the HGW, in order to make it possible to detect that a handover to the HGW would be desirable.

The monitored beacon channels are indicated to the mobile terminals by the access network, by means of system information broadcast by the base stations or of common signaling transmitted to the mobile terminal. In the example of UMTS, the standards provide for a maximum list of 48 beacon channels monitored simultaneously by a terminal in idle mode, and a subset of that list in connected mode. This limit has been designed for the public part of the access network where the implantation density of base stations remains moderate.

However, with the deployment of HGWs, this limit poses a problem. There can be very numerous HGWs installed within the coverage of one public macrocell, or even inside a building. Therefore, the maximum of 48 monitored cells makes it impossible to probe all the potential candidate HGWs. Even if the limit of 48 was exceeded, it would not be realistic for the terminals to monitor very large number of beacon channels simultaneously.

An object of the present invention is to provide a solution allowing user mobility from the public part of the access network to a home gateway owned by the user or to which the user has access rights.

The invention thus proposes a mobility management method for mobile terminals in a cellular wireless communication system, the system comprising a core network and an access network, the access network comprising base stations distributed over a territory covered by the system and base station controller units each controlling a plurality of the base stations. Each base station broadcasts a beacon channel for detection by mobile terminals within range of this base station. According to the invention, the method comprising the steps of:
- indicating a user-independent list of beacon channels from the access network to a mobile terminal;
- further indicating at least one user-specific beacon channel associated with a user of the mobile terminal on a dedicated resource from the access network to the mobile terminal; and
- monitoring beacon channels of the user-independent list and the user-specific beacon channel at the mobile terminal.

The terminal is thus allowed to monitor not only cells chosen independently of which user utilizes the terminal, based on geographic criteria, but also one or more cells specifically defined for that user. Such user-specific cell will typically be that covered by a HGW owned by the user, or for which he/she is granted access rights. With some additional signaling in the network, this makes it possible to easily hand over a communication from public part of the access network to a home gateway, thus offering a solution to the above-discussed user mobility problem.

The identifier(s) of the user-specific beacon channel(s) are stored within the network. In a typical embodiment, such storage takes place within a home location register (HLR) unit of the core network, where the subscriber identities are recorded along with various other information relating to the subscribers' rights to use the network resources. The beacon channel identifier is transferred to a visitor location register (VLR) unit and from there to the access network for transmission to the user's terminal once a connection with the access network is established.

Another aspect of the present invention relates to a mobile terminal for communicating through a cellular wireless communication system, comprising means for monitoring a plurality of downlink beacon channels from respective base stations of an access network of the system, and radio resource control means for establishing a connection with a base station controller unit. The monitored beacon channels include beacon channels of a user-independent list indicated by the access network and at least one user-specific beacon channel associated with a user of the mobile terminal and indicated by the access network on a dedicated resource.

Yet another aspect of the present invention relates to a base station controller unit for a cellular wireless communication system, comprising an interface with a core network of the system, an interface with a plurality of controlled base stations of the system, means for causing each of the controlled base stations to transmit to mobile terminals a user-independent list of beacon channels respectively used by other base stations neighboring this controlled base station, radio resource control means for establishing a connection with a mobile terminal within range of at least one of the controlled base stations, and means for indicating over the established connection at least one user-specific beacon channel associated with a user of the mobile terminal.

The invention also proposes core network entities adapted for implementing the above method, in particular:
- a home location register unit comprising: a plurality of records stored for respective users of mobile terminals, each record including at least a subscriber identity associated with the respective user, a location area identifier and an identifier of at least one user-specific beacon channel of a base station associated with this user; and means for transmitting at least part of the record for a user to a visitor location register unit in a location update or attachment procedure;
- a visitor location register unit comprising: a plurality of records stored for respective users of mobile terminals, each record including at least a subscriber identity associated with the respective user and an identifier of at least one user-specific beacon channel of a base station associated with this user; means for receiving such records from a home location register unit in a location update or attachment procedure; and means for communicating with at least one base station controller unit of the system, arranged to forward the user-specific beacon channel identifier to a base station controller unit having a radio resource control connection established with the mobile terminal.

Other features and advantages of the invention will become apparent from the following description of non-limiting exemplary embodiments, with reference to the appended drawings, in which:
- figure 1 is a block diagram of a cellular wireless communication system incorporating an embodiment of the invention;
- figure 2 is a block diagram of customer equipment including a home gateway;
- figure 3 is a diagram illustrating different phases of the configuration of a home gateway;
- figure 4 is a block diagram of an exemplary embodiment of a home gateway management server;
- figure 5 is a diagram illustrating exchanges between network entities in an embodiment of the invention; and
- figure 6 is a block diagram of core network entities involved in an embodiment of the invention.

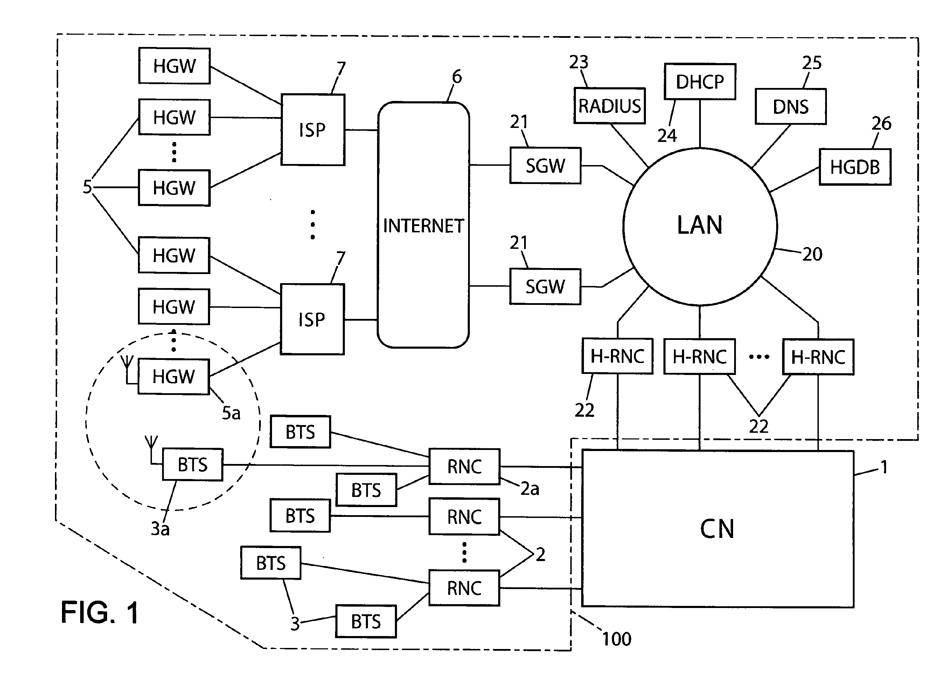

Referring to figure 1, a conventional UMTS system includes a core network (CN) 1 comprising interconnected switches referred to as MSC/VLR (mobile switching center / visitor location register) for circuit-switched services and as SGSN (serving GPRS support node) for packet-switched services. In the UMTS terrestrial radio access network (UTRAN) architecture, a number of radio network controllers (RNCs) 2 are connected to the CN switches. Each RNC 2 supervises a number of base transceiver stations (BTSs) 3, or "nodes B" through an interface referred to as lub in the UMTS standards. The BTSs are distributed over the territory to be covered by the access network 100. Each BTS serves one or several cells where the cellular service is made available to the public.

In the embodiment of the invention depicted in figure 1, home gateways (HGWs) 5 are added to the access network 100 to define cells of a different kind. A HGW 5 uses the same radio interface as a regular BTS 3. For convenience, the set of HGWs 5 can be allocated a specific carrier frequency distinct from that or those used by the BTSs 3, so as to avoid complications in the radio engineering of the public part of the access network due to interference with HGWs. The radio range of a HGW is low, typically a few tens of meters. It is intended to be installed in customer premises, so that it is an efficient means for the cellular operator to offer indoor coverage.

A HGW 5 uses the customer's digital subscriber line (DSL) for broadband access to the Internet 6, for example an asymmetric digital subscriber line (ADSL). The customer's DSL connects the HGW 5 to a router 7 of his/her Internet service provider (ISP).

A private operator network organized as a local area network (LAN) 20 is provided for the integration HGWs 5 to the cellular access network 100. The units of the private operator network 20 include:
- security gateways (SGW) 21 connected to the Internet 6 and capable of establishing secure tunnels with the HGWs through the Internet 7;
- a plurality of RNCs 22, designated here as H-RNC, each connected to the core network 1;
- an authentication server 23, typically using the RADIUS protocol;
- a DHCP server 24 for providing the HGWs with IP addresses in accordance with the standard dynamic host configuration protocol (DHCP);
- a domain name server (DNS) 25; and
- a home gateway management server 26, or home gateway database (HGDB).

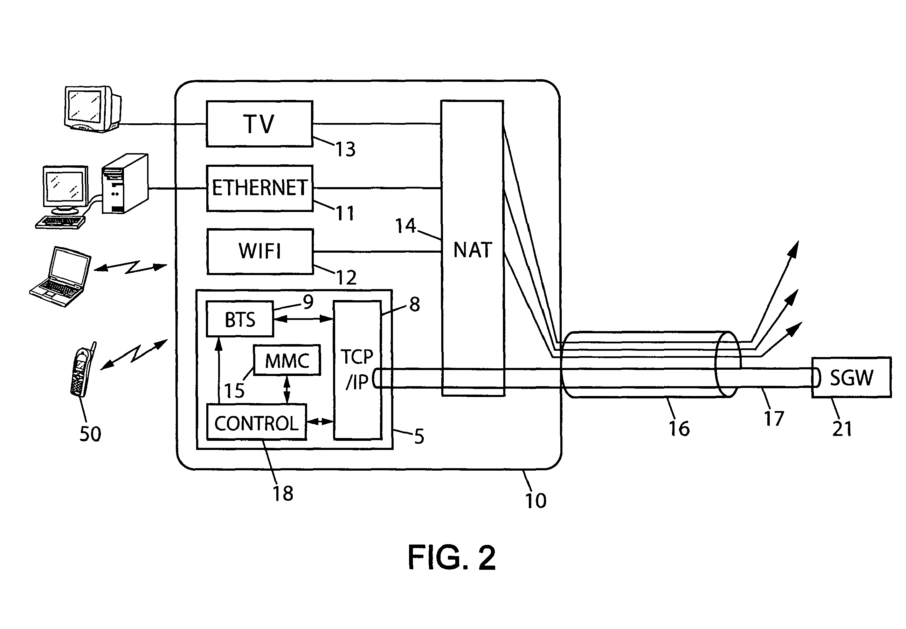

In an exemplary embodiment (figure 2), the HGW 5 belongs to a set top box 10, either as a built-in unit or as a peripheral unit, along with other modules such as an Ethernet board 11, a Wifi board 12, a TV decoder 13, etc. A network address translator (NAT) module 14 is provided within the set top box 10 for interfacing with the Internet via the subscriber's access line 16 and separating the public addressing domain from the private addressing domain of the customer.

The HGW 5 has a network (TCP/IP) interface 8 and a BTS unit 9 suitable for performing the node B functions of the UMTS standard. The HGW 5 is also fitted with a memory microcard (MMC) module 15 in which certain parameters are stored, including:
- a HGW identifier (ID) accessible for reading only, which may be coded in the same manner as the international mobile subscriber identity (IMSI);
- the IP address of a main SGW 21 to be contacted by the HGW. A backup SGW IP address may also be provided in case the main SGW would not be available;
- the IP address of a HGDB 26 to be contacted by the HGW; and
- security credentials for the HGW, stored internally of the MMC without any possible access from the outside.

A control module 18 of the HGW 5 supervises the operation of the BTS unit 9 and exchanges information with the MMC module 15 and the private operator network 20 as described further on.

Before the HGW 5 is delivered to the customer, some pre-configuration is needed to create the HGW ID and the associated security credentials, to record them into the RADIUS server 23, and to load the above-listed parameters into the MMC module 15. In addition, any customer-specific parameters needed for the operation of the HGW ID is defined and stored in the HGDB 26.

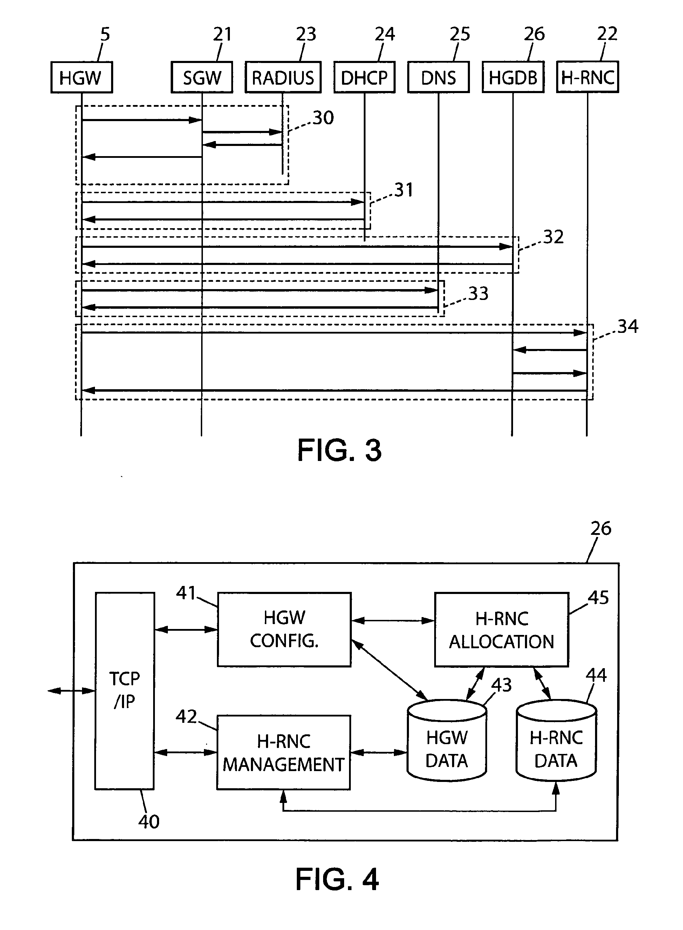

The HGW 5 is designed to be plug-and-play. When the customer plugs in and activates his HGW, its control module 18 automatically contacts the SGW 21 at the IP address written in the MMC module 15. This initiates the Internet access phase 30 indicated in figure 3. In connection with the RADIUS server 23, the SGW proceeds with the authentication of the HGW and the establishment of an IPsec tunnel 17 with the HGW. This secure tunnel 17 will be used to encapsulate the UMTS lub interface between the BTS unit 9 of the HGW and a H-RNC 22 over the Internet 6. The use of a secure tunnel prevents unauthorized HGWs from getting service from the CN 1 and avoids various potential security threats.

The next phase 31 of the configuration is the assignment of an IP address to the HGW by means of a request sent by the control module 18 of the HGW to the DHCP server 24. Then, in phase 32, the control module 18 of the HGW 5 contacts the HGDB 26 whose address is stored in the MMC module15, and retrieves from this HGDB all the customer-specific parameters including the domain name of a H-RNC 22 allocated to this HGW. In phase 33, the IP address of the H-RNC is resolved by an exchange between the control module 18 of the HGW and the DNS 25. The HGW 5 can then proceed with the attachment 34 of its BTS unit 9 with the allocated H-RNC 22.

In the attachment phase 34, the HGW sends an attachment request to its H-RNC 22. The H-RNC retrieves from the HGDB 26 all the parameters provisioned for this HGW and confirms the attachment to the HGW. The BTS unit 9 is then capable of supporting communications for one or more terminals (UE, "user equipment") 50 located within its range.

The attachment phase 34 is repeated each time the HGW 5 is switched on. The parameters which are returned by the HGDB 26 upon the H-RNC's request include the identity of the H-RNC 22 currently allocated to the HGW. It can happen that the allocation changes over time, and in this case, the H-RNC contacted by the control module 18 and receiving the ID of another H-RNC from the HGDB notes the inconsistency and returns to the HGW a message to cause the HGW to resume its configuration procedure from the start. This will establish the new link between the HGW and its new serving H-RNC. The previous H-RNC then removes the HGW from its list of supervised BTSs.

Optionally, certain post-configuration steps can be executed once the actual owner of the HGW is known, in order to add information to the previously stored customer-specific parameters, such as the geographical coordinates of the installed HGW, for emergency services, or some mobility information usable in certain advantageous embodiments described further on.

Figure 4 illustrates a possible structure of a HGBD 26 having a TCP/IP interface 40 with the LAN 20, a HGW configuration module 41 for exchanging information with the control modules 18 of the HGWs 5 as indicated above, and a H-RNC management module 42. The HGBD 26 has two databases 43, 44, one for storing the HGW data and one for storing the H-RNC data.

The HGW database 43 contains the customer-specific data created when programming the MMC modules 15 as well as the identification of the H-RNCs 22 respectively allocated to the HGWs 5.

The H-RNC database 44 contains OMC information on the pool of H-RNCs 22 of the private LAN 20. In particular, it can contain, for each H-RNC 22:
- an indication of the load of the H-RNC, in terms of number of HGWs 5 to which it is allocated;
- connectivity information identifying the RNCs 2 of the public part of the cellular access network 100 with which the switches of the core network 1 can provide connectivity.

The H-RNC management module 42 is in charge of updating the contents of the H-RNC database 44. It also communicates with the H-RNC 22 in the above-described attachment phase 34.

The HGBD 26 further has an allocation module 45 which can apply different strategies or algorithms to allocate H-RNCs 22 to the HGWs 5.

In an advantageous embodiment, an RNC pooling approach is used, in which the allocation module 45 assigns the least loaded RNC (based upon the information of the H-RNC database 44) each time a HGW 5 runs the setup process, i.e. is switched on.

Such an approach makes use of a load balancing criterion among the H-RNCs 22 of the private LAN 20 to select the base station control unit selected for a HGW. It will be appreciated that the load to be balanced could be measured differently. For example, instead of being measured only in terms of numbers of attached HGWs, it can take into account a weighting derived from the average amount of communications established through a particular H-RNC, which depends on the customer's activity, or the mean throughput of such communications. If such a possibility is used, the parameters to determine the weightings must be provided by the H-RNCs 22 to management module 42 for storage in the H-RNC database 44.

When a mobility option is offered to certain users, the location of their HGWs 5 is taken into account by the allocation module 45, along with the connectivity information stored in the H-RNC database 44.

For example, in figure 1, the dashed circle indicates that the HGW 5a is under the radio coverage of an umbrella cell served by a BTS 3a of the public part of the cellular network. If the owner of the HGW 5a has subscribed a mobility option, he/she has to indicate the location where the HGW is installed. The location information, an identifier of the BTS 3a of the umbrella cell and an identifier of the RNC 2a supervising that BTS 3a are stored in the HGW database 43 as part of the record provided for the HGW 5a. In phase 32, when the HGDB 26 is contacted by the HGW 5a, the allocation module 45 notes from the database 43 that the mobility option is active for that HGW and recovers the identifier of the RNC 2a. By looking up the H-RNC database 44, it then selects a H-RNC 22 for which there is connectivity via the CN 1 and the selected H-RNC is indicated in the response to the HGW 5a.

In addition, upon receipt of the H-RNC's request in the attachment phase 34, the H-RNC management module 42 retrieves the identifier of the BTS 3a of the umbrella cell from the HGW database 43 (or the group of such identifiers if the HGW is within more than one cell), and this(ese) identifier(s) is(are) returned to the H-RNC as part of the HGW configuration parameters. The H-RNC 22 then signals to the HGW 5a which BTS is to be monitored by a UE having a communication through the HGW 5a for a possible handover of the communication. The corresponding information is included by the HGW 5a into the system information broadcast on a common signaling channel, or transmitted to the UE on a dedicated channel.

In the embodiment presented above, where the HGWs use a specific carrier frequency, the HGW 5a generally does not indicate any neighbor cells for intra-frequency measurements, because handovers from a HGW to another HGW are generally not allowed. The monitoring by the UE of the neighbor cell(s) (BTS 3a) is done in the so-called compressed mode, in which transmission gaps are provided to let the UE perform inter-frequency measurements while the communication proceeds. The measurements made by the UE on the signal received from the serving HGW 5a and on the signals received in compressed mode from the neighboring BTS 3a are reported to the serving H-RNC 22 as part of the radio resource control (RRC) procedures. The handover criteria checked by the H-RNC are based on such measurements, possibly completed by measurements made by the HGW 5a, to decide whether a handover is needed depending on the radio conditions observed in the communication. When the inter-frequency handover is decided, the corresponding signaling is sent to the new BTS 3a (owing to the connectivity ensured by the CN 1) and to the UE via the old BTS 9 within the HGW 5a.

The module 45 can use different allocation algorithms in parallel for different HGWs, in particular if the above mobility option applies to only some of the HGWs. For example, the H-RNC pooling approach can be applied to the HGWs without the mobility option.

The H-RNCs 22 are functionally similar to the RNCs 2 of the public part of the cellular access network 100. The following differences can be noted:
- there is no node B provisioned a priori. The HGW are dynamically attached, using the mechanisms described above;
- the H-RNC interface with its controlled BTSs 9 is based on the IP protocol as indicated above;
- a new mechanism may be implemented, for the H-RNC 22 to provide the HGDB 26, upon request, with the number of attached HGWs and/or the above-mentioned weighting parameters. This is required if the HGDB 26 is to balance the load between H-RNCs;
- the call processing task can be modified to incorporate IMSI checking against an access grant list (AGL).

Moreover, the dimensioning of a H-RNC 22 will generally be different from that of a RNC 2. A conventional RNC 2 is typically designed to manage from 1,000 to 2,000 BTSs 3 or cells each having a relatively high traffic capacity (e.g. about 4 Erlang). In contrast, a H-RNC may have to manage up to 50,000 or 100,000 HGWs 5 of lower traffic capacity (e.g. about 0.1 Erlang).

An access grant list (AGL) is useful in the situation where not every UE is allowed to communicate through a HGW 5. As the HGW 5 is using the private DSL access of its owner, it is useful to optionally provide a service to restrict the access to users which are explicitly allowed by the HGW owner. The AGL contains a list of the IMSI of users authorized to communicate through a given HGW (for example up to sixteen IMSIs). It is permanently stored at the HGW database 43 and downloaded to the allocated H-RNC during the attachment phase 34.

It is possible to define in the HGDB, for each HGW 5, the restriction policy which applies. Table I below shows the features of three possible policies, namely shows if there is a restriction based on an AGL.

The OPEN policy is intended to apply to relatively isolated places, i.e. where there is little or no interference from neighbors, if the owner does not want to actually manage the access to his HGW. The HGW 5 can then be regarded as an extension of the outdoor coverage of the network.

The PRIVATE policy is also intended for isolated places, but in cases where the owner wants to exert some control on the access. However, in that case, any "non-allowed" user may roam on that HGW and receive calls, although it is not able to originate calls, except calls identified with the emergency cause.

The CLOSED policy applies to owners who want to have the full control of who is using the HGW 5, and may be used in areas populated with HGWs in close neighborhood, such as in urban areas. Rejection of location area (LA) update (*) is achieved with the "forbidden LA" cause to resolve the near-far issue when a user is closer from his neighbor's HGW than from his own. HGWs using this policy cannot be considered as extensions of the outdoor coverage, except for their owner and the users registered in the AGL.

**Table I**

| Policy: | OPEN | PRIVATE | CLOSED |
|---|---|---|---|
| Restrictions on Mobile Originated calls (standard)? | No | Yes | Yes |
| Restrictions on Mobile Originated calls (emergency)? | No | No | No |
| Restrictions on Location Area update? | No | No | Yes (*) |
| Restrictions on Mobile Terminated calls? | No | No | Yes |

When a connection request for a given IMSI is received at the H-RNC 22 allocated to a HGW to which the PRIVATE or CLOSED policy applies, the H-RNC checks the type of call and if necessary whether the IMSI belongs to the AGL pertaining to the HGW in order to decide whether the connection setup can be continued.

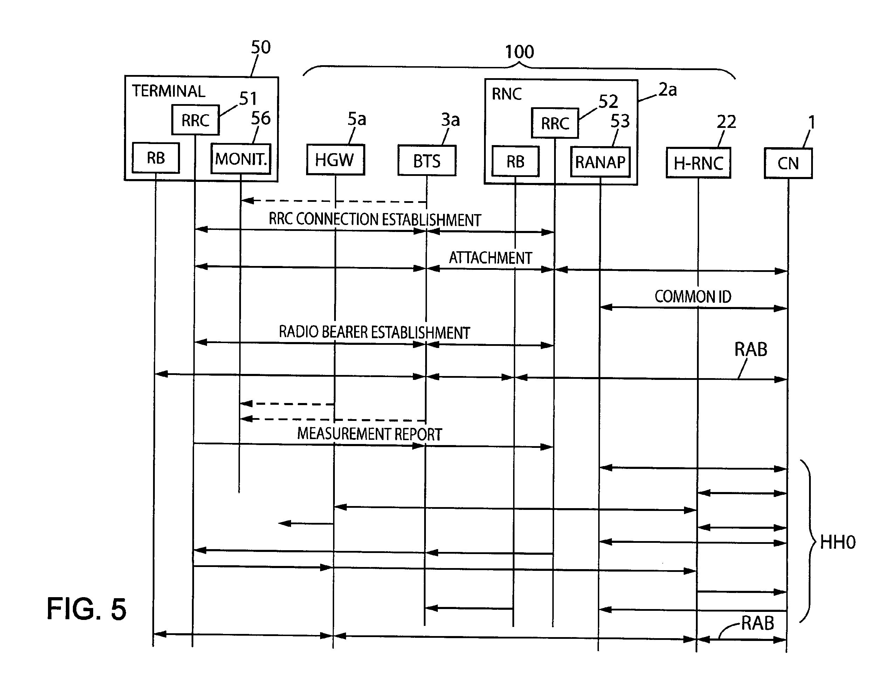

The user of the mobile terminal can be allowed to have access to the network through one or more HGWs 5 in addition to the BTSs 3 of the public part of the access network 100. Such a user can take advantage of an optional handover functionality from the public part of the network to a HGW to which he/she has been granted access rights. Figure 5 illustrates certain exchanges which take place when such option is implemented. We consider here the case of a UE having a communication through the BTS 3a shown in figure 1 and moving towards the vicinity of his HGW 5a.

In figure 5, the dashed lines indicate beacon signals broadcast by base station units on common signaling channels. In a known manner, the common signaling channel conveys system information broadcast by the base station under the control of its controlling RNC. The broadcast system information includes a user-independent list identifying up to forty-eight beacon channels used by base stations located in the neighborhood of the base station in question. In the UMTS, each beacon channel corresponds to a scrambling code used by a base station on its primary common pilot channel (CPICH).

Some modules of the mobile terminal 50 and of the RNC 2a supervising the BTS 3a are depicted in figure 5. References 51 and 52 represent the RRC peer entities located in the mobile terminal 50 and in the RNC 2a, respectively. The RRC layer manages the signaling connection established between the access network 100 and the mobile terminal 50. This RRC connection is established between the modules 51 and 52 of the terminal and of the RNC. In the example shown in figure 5, this is done through the BTS 3a supervised by the RNC 2a. When the mobile station is in connected mode, i.e. a RNC connection has been established, the RRC module 52 of the RNC 2a can control the UE to perform measurements on monitored beacon channels forming a subset of the list identified in the system information broadcast by the BTS 3a, by means of the MEASUREMENT CONTROL message.

If the mobile terminal 50 has not yet been attached to the core network 1, this is done in the attachment phase illustrated in figure 5. In the attachment phase, the mobile terminal sends a request to the core network 1 through the BTS 3a and the RNC 2a. This is done by means of the MM protocol (Mobility Management) for the circuit-switch (CS) domain, and by means of the GMM protocol (GPRS mobility management) for the packet-switched domain (PS). The MSC/VLR or SGSN then contacts the HLR in order to authenticate the user. The communications between the MSC/VLR or SGSN and the HLR make use of the MAP protocol (mobile application part).

Then, the CN 1 runs the "Common ID" procedure to inform the RNC 2a about the user's identity (IMSI). The Common ID message is part of the RANAP protocol (radio access network application part) implemented on the lu interface between the RNC and the core network.

In an embodiment of the invention, the RANAP Common ID message is extended to include the identifier(s) of the beacon channel(s) broadcast by the HGW(s) to which the user can have access. These identifiers are stored in the HLR for the subscriber and transferred to the MSC/VLR or SGSN as described further below.

Upon receipt of such identifier(s) by its RANAP module 53, the RNC stores them in association with the user's IMSI. When a radio bearer (RB) is established between the RNC 2a and the mobile terminal 50 by means of the RRC protocol, as part as a radio access bearer (RAB) between the CN 1 and the terminal 50, the identifier of the each HGW beacon channel stored for the user is sent to the mobile terminal 50 in one of the messages sent on the dedicated downlink control channel, for example the "RADIO BEARER SETUP" message of the RRC protocol.

When a communication is in progress (RAB active), the mobile terminal 50 monitors a number of beacon channels broadcast by BTSs 3 located in the neighborhood of the current serving BTS 3a. In accordance with the invention, it also monitors the beacon channel of each HGW which has been indicated by the RNC 2a. This task is carried out by the monitoring module 56, which measures the received signal strength and/or quality on the different beacon channels, depending on what the RNC requested in the MEASUREMENT CONTROL message.

The measurements made are reported by the mobile terminal 50 to the serving BTS 3a which forwards them, along with its own measurement, to the RNC 2a. The RNC is responsible for checking the handover criteria which have been defined by the cellular operator. These criteria generally include tests on the power measurements made by the mobile terminal on the beacon channels and reported on the RRC connection.

In certain circumstances, the RNC 2a finds that a criterion for handing over the call to the HGW 5a is fulfilled, and in this case the decision is made to hand over the communication from the base station 3a to that of the HGW 5a.

In the embodiment indicated above, where the HGWs 5 do not use the same carrier frequency as the BTSs 3 of the public part of the access network 100, the handover procedure is carried out as a hard handover (HHO), involving messages schematically shown in figure 5. In the core network 1, this involves a serving radio network subsystem (SRNS) relocation procedure to transfer the radio bearer from the old RNC 2a to the new (H-)RNC 22. RANAP messages are first exchanged between the RNC 2a and the MSC/VLR (SGSN) and then between the MSC/VLR (SGSN) and the H-RNC 22 to initiate the relocation procedure. The H-RNC 22 then initiates a radio link setup by the HGW 5a and reports to the MSC/VLR (SGSN) when this is done. The HGW 5a can then start transmission and reception on the radio link which has been set up. The MSC/VLR (SGSN) instructs the old RNC 2a to control a reconfiguration of the physical channel on the established RNC connection with the mobile terminal 50. Once this is done, the transfer of the radio access bearer to the new H-RNC 22 is achieved and the old RNC 2a and BTS 3a are informed that they can release the dedicated resources that they were using for the terminal 50.

THE HGW beacon identifiers are transferred from the HLR 60 to the MSC/VLR or SGSN 65 in a location update procedure which is run at the initiative of the mobile terminal, either when it detects that it has changed its location area or periodically. The location update procedure is very similar to the attachment procedure mentioned above. It makes use of the MM or GMM protocol between the mobile terminal and the MSC/VLR or SGSN, and of the MAP protocol within the core network.

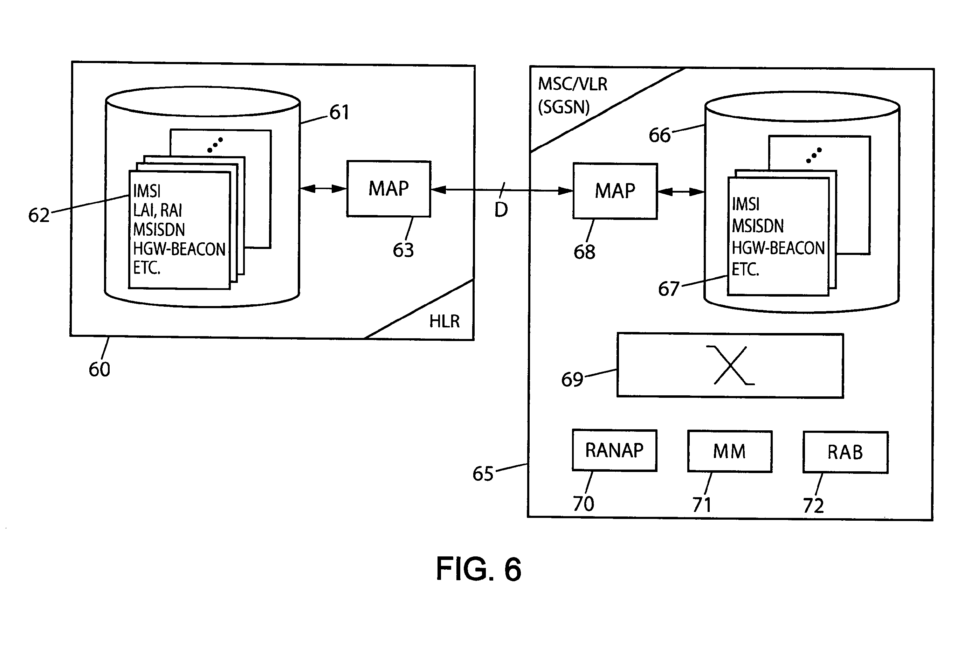

In the location update or attachment procedure, the MAP message "Insert Subscriber Data" is used by the HLR to transfer to the visitor location register unit hosted by the MSC/VLR or SGSN the HLR record including the IMSI of the subscriber. In figure 6, references 63 and 68 designate the MAP peer entities of the HLR and VLR, which communicate through the D interface.

As shown in figure 6, such a record 62, stored in the database 61 of the HLR 60, includes :
- the IMSI of the subscriber;
- the location area identifier (LAI) for the CS domain, and the routing area identifier (RAI) which has a similar meaning for the PS domain (the SGSN is provided with a VLR type of unit based on the notion of routing area);
- the mobile station international subscriber directory number (MSISDN) which is the phone number of the subscriber;
- the HGW beacon identifier(s) relating to the HGW(s) to which the user is authorized to have access;
- various other subscription data.

The VLR unit of the MSC/VLR or SGSN 65 also has a database 66 in which copies 67 of part of the HLR records for the subscribers located in the LA/RA pertaining to the VLR unit are stored, including HGW beacon identifiers for those subscribers who make use of the above-described mobility option. Such HGW beacon identifiers are transferred by the RANAP module 70 of the MSC/VLR or SGSN 65, for example in the above-mentioned Common ID message. Also shown schematically in figure 6 are the switching fabric 69 of the MSC/VLR or SGSN 65, its MM (or GMM) module communicating with the UE in particular in the attachment and location update procedures, and the radio access bearer endpoint 72.

The invention has been described above in the particular case of a UMTS network for the sake of illustration. It will be appreciated that it is applicable to various kinds of cellular network. It is also possible to provide the disclosed mobility management method only for certain services offered to the subscribers, for example only for the packet-switched (PS) domain, and not for the circuit-switched (CS) domain services.

## Claims

1. A mobility management method for mobile terminals (50) in a cellular wireless communication system, the system comprising a core network (1) and an access network (100), the access network comprising base stations (3, 3a, 5, 5a) distributed over a territory covered by the system and base station controller units (2, 2a, 22) each controlling a plurality of the base stations, wherein each base station broadcasts a beacon channel for detection by mobile terminals within range of said base station, the method comprising the steps of:
- indicating a user-independent list of beacon channels from the access network to a mobile terminal;
- further indicating at least one user-specific beacon channel associated with a user of said mobile terminal on a dedicated resource from the access network to said mobile terminal; and
- monitoring beacon channels of said user-independent list and the user-specific beacon channel at the mobile terminal.

2. The method as claimed in claim 1, further comprising the steps of:
- establishing a radio resource control connection between said mobile terminal (50) and a base station controller unit (2a);
- obtaining from the core network (1) at said base station controller unit an identifier of at least one user-specific beacon channel associated with the user of said mobile terminal;
- indicating the user-specific beacon channel identifier to said mobile terminal over the radio resource control connection.

3. The method as claimed in claim 2, further comprising the steps of:
- checking at said base station controller unit (2a) whether at least one handover criterion is fulfilled by measurements reported by the mobile terminal (50) over the radio resource control connection, including measurements made on the user-specific beacon channel; and
- in response to fulfillment of a handover criterion, handing over a communication from a base station (3a) controlled by said base station controller unit to a base station (5a) broadcasting said user-specific beacon channel.

4. The method as claimed in claim 2 or 3, wherein the beacon channel identifier is stored in a home location register of the core network (1).

5. The method as claimed in claim 4, wherein the beacon channel identifier is transferred from the home location register to a visitor location register of the core network (1) in a location update or attachment procedure.

6. The method as claimed in any one of the preceding claims, wherein the user-specific beacon channel is a beacon channel broadcast by a base station unit (5, 5a) of a home gateway to which said mobile terminal (50) is allowed to have access.

7. A mobile terminal for communicating through a cellular wireless communication system, the mobile terminal (50) comprising means (56) for monitoring a plurality of downlink beacon channels from respective base stations (3, 3a, 5, 5a) of an access network (100) of the system, and radio resource control means (51) for establishing a connection with a base station controller unit (2, 2a), wherein the monitored beacon channels include beacon channels of a user-independent list indicated by the access network, **characterized in that** the monitored beacon channels further include at least one user-specific beacon channel associated with a user of said mobile terminal and indicated by the access network on a dedicated resource.

8. The mobile terminal as claimed in claim 7, wherein the beacon channel associated with the user is a beacon channel broadcast by a home gateway (5, 5a) to which said mobile terminal (50) is allowed to have access.

9. A base station controller unit for a cellular wireless communication system, the base station controller unit (2a) comprising an interface with a core network (1) of the system, an interface with a plurality of controlled base stations (3, 3a) of the system, means (52) for causing each of the controlled base stations to transmit to mobile terminals a user-independent list of beacon channels respectively used by other base stations neighboring said controlled base station, and radio resource control means (52) for establishing a connection with a mobile terminal (50) within range of at least one of the controlled base stations, **characterized in that** it further comprises means (52) for indicating over the established connection at least one user-specific beacon channel associated with a user of said mobile terminal.

10. The base station controller unit as claimed in claim 9, further comprising means (53) for obtaining an identifier of said at least one user-specific beacon channel from the core network (1).

11. A home location register unit for a cellular wireless communication system, the home location register unit (60) comprising a plurality of records (62) stored for respective users of mobile terminals (50), each record including at least a subscriber identity associated with the respective user and a location area identifier, and means (63) for transmitting at least part of the record for a user to a visitor location register unit (65) in a location update or attachment procedure, **characterized in that** the respective record for at least one user further includes an identifier of at least one user-specific beacon channel of a base station (5, 5a) associated with said user.

12. A visitor location register unit for a cellular wireless communication system, the visitor location register unit (65) comprising a plurality of records (67) stored for respective users of mobile terminals (50), each record including at least a subscriber identity associated with the respective user, means (68) for receiving said records from a home location register unit (60) in a location update or attachment procedure, and means (70) for communicating with at least one base station controller unit (2, 2a) of the system, **characterized in that** the respective record received for at least one user of a mobile terminal further includes an identifier of at least one user-specific beacon channel of a base station (5, 5a) associated with said user, and **in that** said means for communicating (70) are arranged to forward the user-specific beacon channel identifier to a base station controller unit having a radio resource control connection established with said mobile terminal.

## Amended claims

### Amended claims in accordance with Rule 86(2) EPC.

**1.** A mobility management method for mobile terminals (50) in a cellular wireless communication system, the system comprising a core network (1) and an access network (100), the access network comprising public and private network base stations (3, 3a, 5, 5a) distributed over a territory covered by the system and base station controller units (2, 2a, 22) each controlling a plurality of the base stations, wherein each base station broadcasts a beacon channel for detection by mobile terminals within range of said base station, the method comprising the steps of:
- indicating a user-independent list of beacon channels from the access network to a mobile terminal; **characterized by**
- further indicating at least one user-specific beacon channel associated with a user of said mobile terminal on a dedicated resource from the access network to said mobile terminal; and
- monitoring beacon channels of said user-independent list and the user-specific beacon channel at the mobile terminal for performing a handover between a public network base station (3, 3a) and a private network base station (5, 5a).

**2.** The method as claimed in claim 1, further comprising the steps of:
- establishing a radio resource control connection between said mobile terminal (50) and a base station controller unit (2a);
- obtaining from the core network (1) at said base station controller unit an identifier of at least one user-specific beacon channel associated with the user of said mobile terminal;
- indicating the user-specific beacon channel identifier to said mobile terminal over the radio resource control connection.

**3.** The method as claimed in claim 2, further comprising the steps of:
- checking at said base station controller unit (2a) whether at least one handover criterion is fulfilled by measurements reported by the mobile terminal (50) over the radio resource control connection, including measurements made on the user-specific beacon channel; and
- in response to fulfillment of a handover criterion, handing over a communication from a base station (3a) controlled by said base station controller unit to a base station (5a) broadcasting said user-specific beacon channel.

**4.** The method as claimed in claim 2 or 3, wherein the beacon channel identifier is stored in a home location register of the core network (1).

**5.** The method as claimed in claim 4, wherein the beacon channel identifier is transferred from the home location register to a visitor location register of the core network (1) in a location update or attachment procedure.

**6.** The method as claimed in any one of the preceding claims, wherein the user-specific beacon channel is a beacon channel broadcast by a base station unit (5, 5a) of a home gateway to which said mobile terminal (50) is allowed to have access.

**7.** A mobile terminal for communicating through a cellular wireless communication system, the mobile terminal (50) comprising means (56) for monitoring a plurality of downlink beacon channels from respective public and private network base stations (3, 3a, 5, 5a) of an access network (100) of the system, and radio resource control means (51) for establishing a connection with a base station controller unit (2, 2a), wherein the monitored beacon channels include beacon channels of a user-independent list indicated by the access network, **characterized in that** the monitored beacon channels further include at least one user-specific beacon channel associated with a user of said mobile terminal for the mobile terminal performing a handover between a public network base station (3, 3a) and a private network base station (5, 5a), the user specific beacon channel being indicated by the access network on a dedicated resource.

**8.** The mobile terminal as claimed in claim 7, wherein the beacon channel associated with the user is a beacon channel broadcast by a home gateway (5, 5a) to which said mobile terminal (50) is allowed to have access.

**9.** A base station controller unit for a cellular wireless communication system comprising public and private network base stations (3, 3a, 5, 5a), the base station controller unit (2a) comprising an interface with a core network (1) of the system, an interface with a plurality of controlled base stations (3, 3a) of the system, means (52) for causing each of the controlled base stations to transmit to mobile terminals a user-independent list of beacon channels respectively used by other base stations neighboring said controlled base station, and radio resource control means (52) for establishing a connection with a mobile terminal (50) within range of at least one of the controlled base stations, **characterized in that** it further comprises means (52) for indicating over the established connection at least one user-specific beacon channel associated with a user of said mobile terminal for the mobile terminal performing a handover between a public network base station (3, 3a) and a private network base station (5, 5a).

**10.** The base station controller unit as claimed in claim 9, further comprising means (53) for obtaining an identifier of said at least one user-specific beacon channel from the core network (1).

**11.** A home location register unit for a cellular wireless communication system comprising public and private network base stations (3, 3a, 5, 5a), the home location register unit (60) comprising a plurality of records (62) stored for respective users of mobile terminals (50), each record including at least a subscriber identity associated with the respective user and a location area identifier, and means (63) for transmitting at least part of the record for a user to a visitor location register unit (65) in a location update or attachment procedure, **characterized in that** the respective record for at least one user further includes an identifier of at least one user-specific beacon channel of a base station (5, 5a) associated with said user for the mobile terminals performing a handover between a public network base station (3, 3a) and a private network base station (5, 5a).

**12.** A visitor location register unit for a cellular wireless communication system comprising public and private network base stations (3, 3a, 5, 5a), the visitor location register unit (65) comprising a plurality of records (67) stored for respective users of mobile terminals (50), each record including at least a subscriber identity associated with the respective user, means (68) for receiving said records from a home location register unit (60) in a location update or attachment procedure, and means (70) for communicating with at least one base station controller unit (2, 2a) of the system, **characterized in that** the respective record received for at least one user of a mobile terminal further includes an identifier of at least one user-specific beacon channel of a base station (5, 5a) associated with said user for the mobile terminal performing a handover between a public network base station (3, 3a) and a private network base station (5, 5a), and **in that** said means for communicating (70) are arranged to forward the user-specific beacon channel identifier to a base station controller unit having a radio resource control connection established with said mobile terminal.
